# EUROPÄISCHE PATENTSCHRIFT

(11) **EP 1 622 428 B1**
(45) Veröffentlichungstag und Bekanntmachung des Hinweises auf die Patenterteilung: **15.07.2009**
(21) Anmeldenummer: 05015931.8
(22) Anmeldetag: 21.07.2005
(51) Int. Cl.: H05B 33/08

(54) **Blinkschaltung, insbesondere für eine gleichspannungsgespeiste Warnleuchte**
Flasher circuit, especially for a DC supplied warning lamp
Circuit de clignotement, en particulier pour une lampe alimentée en courant continu

(30) Priorität: 29.07.2004 DE 102004036744
(43) Veröffentlichungstag der Anmeldung: 01.02.2006
(73) Patentinhaber: Novar GmbH, 41469 Neuss (DE)
(72) Erfinder: Politze, Heiner, 41469 Neuss (DE); Krippendorf, Tido, 41812 Erkelenz (DE)
(74) Vertreter: Prietsch, Reiner

(56) Entgegenhaltungen:
- WO-A-02/49917
- FR-A1- 2 714 564
- US-A- 4 866 430
- US-A1- 2003 085 749

## Beschreibung

Die Erfindung betrifft eine gleichspannungsgespeiste Blinkschaltung der im Oberbegriff des Anspruches 1 angegebenen Art. Solche Blinkschaltungen können insbesondere Bestandteil einer Warnleuchte sein.

Warnleuchten mit einer Blinkschaltung werden in großem Umfang insbesondere zur nächtlichen Absicherung von Straßen- und anderen Baustellen, aber auch zur Kenntlichmachung anderer Gefahrenorte sowie als optische Einbruch- und sonstige Gefahrenmelder eingesetzt. Mobile Warnleuchten zur Absicherung von Baustellen beziehen ihre gewöhnlich zwischen 6V und 12V liegende Versorgungsspannung aus einer eigenen Batterie, teilweise auch aus einer zentralen Batterie, an die mehrere Warnleuchten angeschlossen sind. Fest installierte Warnleuchten, die als optische Gefahrenmelder dienen, beziehen, wenn sie funkgesteuert sind, ihre Versorgungsspannung ebenfalls meist aus einer eigenen Batterie, sonst aus einem Niederspannungsversorgungsnetz. Als Leuchtmittel dienen Glühfadenlampen oder Gasentladungs- bzw. Blitzröhren mit vorgeschaltetem Spannungswandler und Zündschaltung. Die Blink- oder Blitzfolgefrequenz beträgt üblicherweise zwischen 0,5 Hz und 3,0 Hz. Die Blink- oder Blitzdauer hängt von der Art des Leuchtmittels ab. Die durchschnittliche Leistungsaufnahme derartiger Warnleuchten liegt in der Größenordnung von einem Watt und ist bei batteriegespeisten Warnleuchten bestimmend für die Zeitabstände, in denen periodisch der zeit- und kostenaufwendige Batteriewechsel vorgenommen oder eine wiederaufladbare Batterie nachgeladen werden muss. Bei fest installierten Warnleuchten bestimmt die Leistungsaufnahme die Zahl der an das Leitungsnetz ohne Erweiterungen anschließbaren Warnleuchten. Ein weiterer Kostenpunkt ist die beschränkte Lebensdauer der jeweiligen Leuchtmittel.

Aus der US-A 2003/0 085 749 ist eine Blinkschaltung mit den Merkmalen der Oberbegriffs des Anspruches 1 bekannt. Die Helligkeit der emittierten Lichtsignale wird über eine Pulsbreitenmodulation eingestellt. Die Schaltung benötigt mindestens zwei unabhängige Signalgeneratoren, den ersten zur Erzeugung eines niederfrequenten Rechtecksignals und den zweiten zur Erzeugung eines hochfrequenten Pulses oder eines hochfrequenten Sägezahnsignals.

Eine weitere Blinkschaltung ist aus der eine Warnleuchte betreffenden US-2004/0041702 A1 bekannt. Sie ist jedoch nicht auf eine Minimierung des Leistungsverbrauches ausgelegt sondern ermöglicht es, die Helligkeit des abgestrahlten Lichtsignals in Abhängigkeit von mittels geeigneter Sensoren ermittelten Umgebungsbedingungen zu ändern. Dies geschieht entweder durch Änderung (Erhöhung oder Verminderung) der Blinkfrequenz und/oder durch Änderung (Verlängerung oder Verkürzung) der "EIN"-Zeit, d.h. des Zeitintervalls, während dessen der Halbleiterschalter innerhalb jeder Blinkperiode durchlässig geschaltet ist.

Im Gegensatz dazu liegt der Erfindung die Aufgabe zugrunde, die Blinkschaltung mit den Merkmalen des Oberbegriffes des Anspruches 1 dahingehend zu verbessern, dass sie bei gleichem subjektivem Helligkeitseindruck einen erheblich geringeren Leistungsverbrauch mit den daraus folgenden Kostenvorteilen einer wesentlich längeren Batterielebensdauer bzw. einer erheblichen Vergrößerung der Zahl der an ein vorhandenes Leitungsnetz anschließbaren Warnleuchten hat.

Diese Aufgabe ist erfindungsgemäß durch die im Patentanspruch 1 angegebenen Merkmale gelöst.

Die Lösung beruht darauf, dass der Taktgeber ein gemischtes oder zusammengesetztes Steuersignal für den Halbleiterschalter erzeugt, nämlich innerhalb der "EIN"-Zeit jedes Blinktaktes eine Folge kurzer Pulse mit einer im Verhältnis zur Pulsdauer erheblich längeren Pulspause. Dementsprechend strahlen die LED oder die LEDs in jedem Blinktakt eine rasche Folge von Lichtblitzen ab, die das menschliche Auge jedoch aufgrund seiner Trägheit als einen einzigen Lichtblink wahrnimmt, auf den eine von dem Taktgeber bestimmte "AUS"-Zeit folgt. Die Summe aus "EIN"-Zeit und "AUS"-Zeit ist gleich der Periodendauer der Blinkfrequenz.

Die Pulse können mit einer Pulsperiode von z.B. 200 µs aufeinander folgen, wobei das Maximum der Lichtintensität entsprechend dem im wesentlichen linearen Anstieg und dem exponentiellen Abfall des Stromes durch die LED nur etwa 20 µs dauert. Während der "EIN"-Zeit von 30 ms strahlt die LED also ca. 150 Einzelblitze ab. Daran schließt sich bei einer Blinkfrequenz von 1 Hz eine Pause von 970 ms an. Die angegebenen Zeiten sind beispielhaft zu verstehen. Es hat sich jedoch in Versuchen gezeigt, dass eine Verlängerung der "EIN"-Zeit über etwa 30 bis 50 ms hinaus die subjektiv empfundene Helligkeit des Blinksignals nicht mehr vergrößert, also lediglich zu einem unnötigen Mehrverbrauch an elektrischer Leistung führt. Umgekehrt nimmt jedoch bei einer deutlichen Unterschreitung des genannten Wertes von 30 ms der subjektive Helligkeitseindruck des Blinks ab. Ebenso wurde festgestellt, dass eine Erhöhung der Zahl der Einzelblitze innerhalb der "EIN"-Zeit die subjektiv wahrgenommene Helligkeit nicht mehr steigert, während umgekehrt eine erhebliche Verringerung der Zahl der Einzelblitze als Intensitätsverminderung wahrgenommen wird.

Ein wesentliches Merkmal der vorgeschlagenen Schaltung besteht des Weiteren darin, dass der Taktgeber eine Strommessschaltung umfasst, die den Halbleiterschalter während der "EIN"-Zeit jeweils sperrt, sobald der Strom durch die LED einen vorgegebenen Höchstwert erreicht hat.

Die Strommessschaltung bestimmt also die Pulsdauer innerhalb der Folge von Pulsen, die den Halbleiterschalter durchlässig schalten und wieder sperren, wodurch die kurzen Lichtblitze der LED oder LEDs erzeugt werden. Dies hat den großen Vorteil, dass der Energieinhalt pro Einzelblitz im Wesentlichen unabhängig von der Speisespannung ist, also insbesondere auch bei sinkender Batteriespannung etwa konstant bleibt, weil der Halbleiterschalter nicht nach einer fest vorgegebenen Pulsdauer sondern bei Erreichen eines vorgegebenen Stromwertes, also bei hoher Speisespannung früher, bei niedriger Speisespannung später, in den Sperrzustand geschaltet wird.

Die vorgeschlagenen Schaltung erzeugt die Folge kurzer Lichtblitze mit sehr geringer elektrischer Verlustleistung. In der Summe beträgt deshalb die Leistungsaufnahme einer Warnleuchte nach der Erfindung nur etwa 10 bis 20 Prozent der Leistungsaufnahme der bekannten oder einer anderen konventionellen Blitz- oder auch Blinkwarnleuchte gleicher subjektiver Helligkeit.

Die Strommessschaltung kann sehr einfach durch einen Strommesswiderstand in Serie zu der LED und einen Vergleicher realisiert werden, an dessen erstem Eingang eine Referenzspannung und an dessen zweitem Eingang die an dem Strommesswiderstand abgegriffene, stromproportionale Spannung anliegt und dessen Ausgangssignal den Halbleiterschalter steuert (Anspruch 2).

Der Taktgeber kann einen den Blinktakt erzeugenden Taktgenerator umfassen, der die Versorgungsspannung des Vergleichers liefert (Anspruch 3), so dass letzterer lediglich während der "EIN"-Zeit arbeitet.

An den Verbindungspunkt zwischen dem Halbleiterschalter und der Induktivität ist ein Schaltelement angeschlossen ist, das den Halbleiterschalter im Sperrzustand hält, bis der Strom in dem die Induktivität, die LED und die Freilaufdiode umfassenden Stromkreis abgeklungen ist . Auf diese Weise wird auch bei rasch aufeinanderfolgenden Strompulsen durch die LED vermieden, dass die LED durch einen zu frühzeitig einsetzenden neuen Strompuls überlastet wird.

Der Taktgeber kann den Halbleiterschalter über einen Steuertransistor schalten und das Schaltelement, das den Halbleiterschalter während des Abklingens des Stromes in dem die Induktivität, die LED und die Freilaufdiode umfassenden Stromkreis im Sperrzustand hält, kann aus einer Diode bestehen, die als Klemmdiode zwischen die Basis des Steuertransistors und den Verbindungspunkt zwischen dem Halbleiterschalter und der Induktivität geschaltet ist (Anspruch 4).

Zur Verbesserung des Wirkungsgrades kann der Halbeiterschalter aus mindestens zwei parallel geschalteten und parallel angesteuerten bipolaren Schalttransistoren bestehen (Anspruch 5), denn zwei Schalttransistoren benötigen wegen ihrer bei kleineren Strömen höheren Stromverstärkung gemeinsam weniger Steuerleistung und haben eine niedrigere Sättigungsspannung als ein einziger bipolarer Transistor, der die gleiche Leistung schaltet.

Als Freilaufdiode eignet sich wegen ihrer niedrigen Durchlassspannung insbesondere eine Schottkydiode (Anspruch 6).

Wenn die Schaltung in einer Warnleuchte zur nächtlichen Absicherung von Gefahrenstellen wie etwa Baustellen verwendet wird, kann ihr die Versorgungsspannung über einen Arbeitskontakt eines Relais zugeführt werden, das Bestandteil einer einen Fotowiderstand umfassenden Dämmerungsschaltung ist (Anspruch 7).

Die Erfindung wird nachfolgend anhand der Zeichnung erläutert. Es zeigt:
- Fig. 1: eine Prinzipschaltbild
- Fig. 2: ein Spannungs-/Zeitdiagramm des Steuersignals in Fig. 1 und
- Fig. 3: ein Schaltbild einer beispielhaften Ausführungsform.

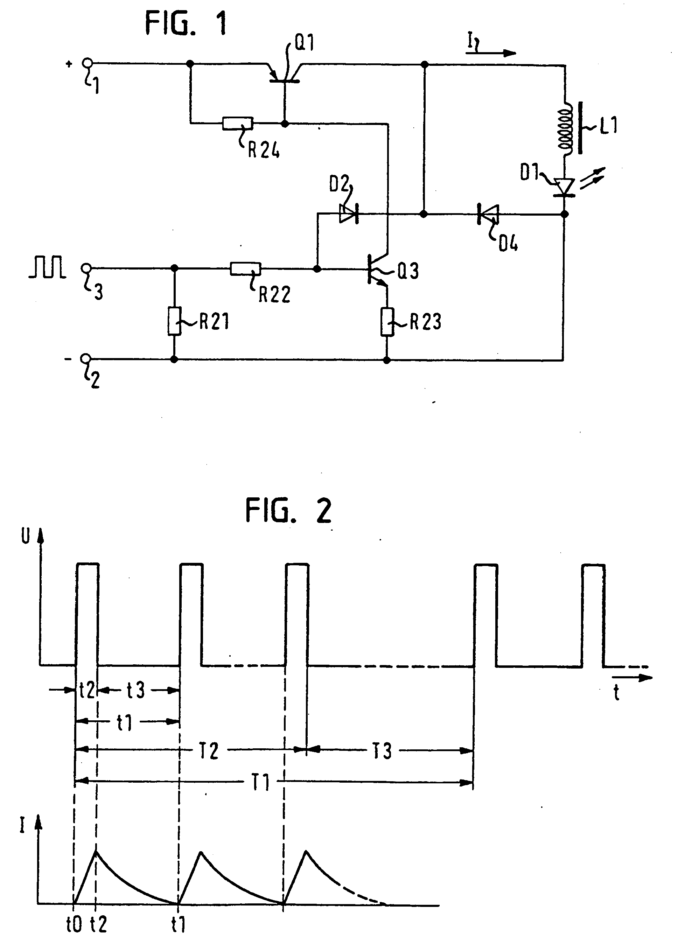

An den Anschlüssen 1 und 2 der Schaltung gemäß Fig. 1 liegt eine Gleichspannung von z.B. 12V an. In Serie mit einem Schalttransistor Q1 liegen eine Induktivität L1 und eine leuchtstarke, rot leuchtende LED D1. Parallel zu der Serienschaltung aus L1 und D1 liegt eine Freilaufdiode D4. An einem Anschluss 3 der Schaltung liegt ein Steuersignal an, dessen zeitabhängiger Verlauf in Fig. 2, oberes Diagramm dargestellt ist. Das Steuersignal wird über einen Spannungsteiler R21, R22 der Basis eines Steuertransistors Q3 zugeführt. Die Basis von Q3 ist über eine Klemmdiode D2 mit dem Kollektor von Q1 verbunden. Im Emitterzweig von Q3 liegt ein Strombegrenzungswiderstand R23. Der Kollektor von Q3 ist mit der Basis von Q1 verbunden. Ein Widerstand R24 zwischen der Basis und dem Emitter von Q1 hält diesen im stromlosen Zustand von Q3 gesperrt.

Gemäß dem oberen Diagramm in Fig. 2 besteht das Steuersignal aus einer raschen Folge von Rechteckpulsen innerhalb eines langsamen Grundtaktes T1 entsprechend der gewünschten Blitzfolgefrequenz der Warnleuchte von z.B. 1 Hz. Jeder Grundtakt umfasst eine (kurze) "EIN"-Zeit T2 von z.B. 30 ms und eine (lange) "AUS"-Zeit T3 von dementsprechend 970 ms. Die rasche Folge von Rechteckpulsen innerhalb der "EIN"-Zeit T2 hat eine Periodendauer t1 von etwa 200 *µ*s, eine Pulsdauer von t2 von beispielsweise 20 µs und dementsprechend eine Pulspause t3 von 180 *µ*s. Ein Steuersignal mit diesem dargestellten Verlauf kann mit einer der üblichen und dem Fachmann bekannten Taktgeneratorschaltungen erzeugt werden, die daher nicht beschrieben werden.

Mit der ansteigenden Flanke jedes Pulses des Steuersignales schaltet Q1 durchlässig, so dass die Batteriespannung (abzüglich der Sättigungsspannung von Q1) an L1, D1 anliegt. Durch L1 und D1 fließt ein Strom I, der bis zu der fallenden Flanke des Pulses etwa linear ansteigt. Die Pulsdauer t2 ist deshalb in Abhängigkeit von den Kennwerten von L1 und D1 so bemessen, dass die fallende Flanke des Pulses den Schalttransistor Q1 in den Sperrzustand schaltet, wenn der Strom durch D1 den zulässigen Maximalwert erreicht hat. Infolge der Freilaufdiode D4 klingt der Strom in dem aus L1, D1 und D4 bestehenden Stromkreis exponentiell ab. Die Pulspause t3 ist so bemessen, dass der Strom etwa auf Null abgeklungen ist, bevor die ansteigende Flanke des nächsten Pulses den Schalttransistor Q1 wieder durchlässig schaltet. Dies zeigt das untere Diagramm in Fig. 2. Sollte der Strom am Ende von t3 nicht hinreichend abgeklungen sein, so hält die Klemmdiode D2 die Basis des Steuertransistors Q3 auf dem (Bezugs-) Potential des Anschlusses 2, so dass der Steuertransistor Q3 nicht bereits mit der ansteigenden Flanke des nächsten Pulses sondern erst nach dem Abklingen des Stromes in dem Kreis L1, D1, D4 durchlässig schalten kann.

Die LED D1 strahlt während der "EIN"-Zeit T2 des langsamen Taktes etwa 150 Einzelblitze ab. Die Summe dieser Einzelblitze wirkt für das menschliche Auge jedoch wie ein einziger Blink. Bei Verwendung einer LED mit einem zulässigen Spitzenstrom im Bereich von etwa 500 mA und einer Induktivität von 1 mH bei einem möglichst niedrigen Ohm*'*schen Widerstand von z.B. 1 Ω (womit die genannten Werte der schnellen Pulsfolge kompatibel sind), hat dieses (scheinbare) Blinksignal für das menschliche Auge subjektiv die gleiche Intensität und damit die gleiche Warnfunktion wie bisher bekannte Warnleuchten sie nach den jeweils einschlägigen Vorschriften haben müssen.

Der hohe Wirkungsgrad und dementsprechend der geringe Stromverbrauch dieser Schaltung beruht des weiteren darauf, dass die Verlustleistung der Schaltung wegen der niedrigen Durchlasswiderstände von Q1, D1 und D4 sowie des geringen Ohm'schen Widerstandes von L1 sehr klein und der Verbrauch an Steuerleistung gering ist, im Gegensatz zu Schaltungen, bei denen die LED über einen Vorwiderstand betrieben wird, der den größten Teil der Speiseleistung in Verlustwärme umwandelt.

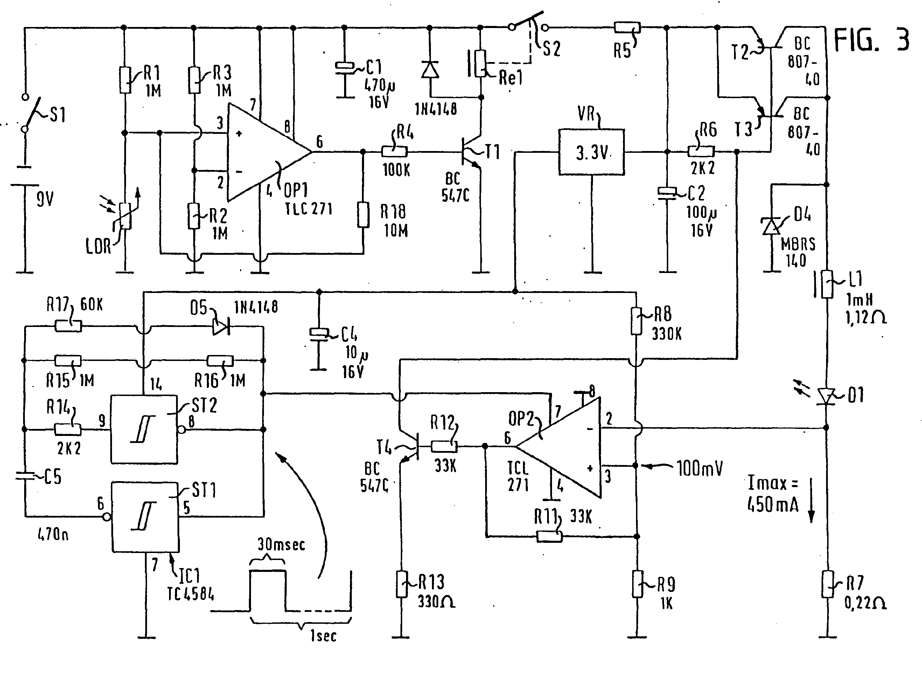

Fig. 3 zeigt das vollständige Schaltbild einer nach diesem Grundprinzip arbeitenden, batteriegespeisten Warnleuchte mit Dämmerungsautomatik. Die Schaltung wird aus einer 9V-Batterie über einen Schalter S1 gespeist. Ein über einen Widerstand R18 rückgekoppelter Operationsverstärker OP1, an dessen nichtinvertierenden Eingang ein Spannungsteiler aus R1 und einem Fotowiderstand LDR angeschlossen ist, arbeitet in an sich bekannter Weise als Dämmerungsschalter. Unterhalb eines eingestellten Dämmerungsschwellwertes schaltet das Ausgangssignal des Operationsverstärkers OP1 einen Transistor T1 durch, in dessen Kollektorzweig die Spule eines Relais Re1 liegt, dessen Arbeitskontakt S2 dann schließt.

Über ein Siebglied R5, C2 liegt die Versorgungsspannung an den Emittern von zwei parallelgeschalteten Schalttransistoren T2, T3 und an einem Spannungsregler VR, der eine integrierte Schaltung IC1 mit z.B. 3,3 V versorgt. Die integrierte Schaltung umfasst zwei Schmitt-Trigger ST1 und ST2, die in an sich bekannter Weise über R14 bis R17, C5 und D5 zu einem Taktgenerator zusammengeschaltet sind, der mit den im Schaltbild angegebenen Werten stromsparend einen sehr genauen langsamen Takt entsprechend (R15+R16)/C5 mit einer Periodendauer von ca. 1s und einer "EIN"-Zeit entsprechend (R15+R16)/R17 von ca. 30 ms erzeugt. Dieses Taktsignal wird einem Operationsverstärker OP2 als Betriebsspannung zugeführt. Dessen erster, nichtinvertierender Eingang liegt an einer zwischen einem hohen und einem niedrigen Wert wechselnden Referenzspannung wie noch erläutert werden wird. Der nichtinvertierende Eingang des OP1 ist außerdem über einen Mitkopplungswiederstand R11 mit dem Ausgang des OP2 verbunden. Das Ausgangssignal von OP2 wird über R12 der Basis eines Transistors T4 zugeführt, der die Rolle des Steuertransistors Q3 in Fig. 1 spielt. In seinem Emitterzweig liegt dementsprechend ein Strombegrenzungswiderstand R13, während sein Kollektor mit den Basen der zwei parallelgeschalteten Schalttransistoren T2 und T3 verbunden ist, die die Rolle des Schalttransistors Q1 in Fig. 1 spielen. In deren gemeinsamen Kollektorzweig liegt dementsprechend die Serienschaltung der Induktivität L1 und der LED D1, deren Kathode jedoch abweichend von Fig. 1 nicht unmittelbar sondern über einen sehr niederohmigen Strommesswiderstand R7 mit dem anderen Anschluss der Batterie und mit dem zweiten, invertierenden Eingang von OP2 verbunden ist. Parallel zu der Serienschaltung aus L1, D1 und R7 liegt die Freilaufdiode D4, hier in Form einer Schottky-Diode mit einer entsprechend niedrigen Durchlassspannung von etwa 0,4 V.

Wenn der Arbeitskontakt S2 des Relais Re1 geschlossen hat und IC1 dementsprechend den langsamen Takt erzeugt, der in der "EIN"-Zeit die Betriebsspannung für OP2 liefert, liegt dessen invertierender Eingang auf Null Volt. Der nichtinvertierende Eingang erhält über R8 eine positive Spannung, sodass der Ausgang von OP2 ein nahe der Betriebs- oder Taktspannung von 3,3 V liegendes Signal liefert, das T4 über R12 durchlässig schaltet, wodurch wiederum T2 und T3 durchlässig schalten. Entsprechend dem Spannungsteilerverhältnis von R9 zu (R11 parallel R8) stellt sich an dem nichtinvertierenden Eingang von OP2 eine Referenzspannung von ca. 100 mV ein. Gleichzeitig beginnt der Strom in der Serienschaltung R1, D1, R7 linear zu steigen, bis der Spannungsabfall an R7 einen positiven Wert erreicht, der gleich oder etwas größer als die Referenzspannung an dem nichtinvertierenden Eingang von OP2 ist. Infolge dessen kippt das Ausgangssignal von OP2 auf Null Volt, wodurch T4 und damit auch T2 und T3 sperren. Gleichzeitig ändert sich aber die Referenzspannung am nichtinvertierenden Eingang von OP2 auf den viel kleineren Wert entsprechend dem Teilerverhältnis von R8 zu (R11 parallel R9), d.h. auf ca. 10 mV. Infolge dieser Hysterese erzeugt OP2 den nächsten Puls erst dann, wenn der Strom durch R7 soweit abgeklungen ist, dass die Spannung am invertierenden Eingang von OP2 kleiner als dieser niedrigere Referenzwert am nichtinvertierenden Eingang geworden ist. Dann erzeugt OP2 an seinem Ausgang das nächste T4 durchlässig schaltende Signal und damit den nächsten Puls. Die Schaltung benötigt deshalb zur Erzeugung des schnellen Taktes mit der kurzen Periodendauer t1 keinen zusätzlichen Taktgenerator sondern ist selbstschwingend.

Zur weiteren Verbesserung des Wirkungsgrades kann die Basis des Steuertransistors T4 entsprechend der Grundschaltung in Fig. 1 über eine Diode mit dem gemeinsamen Verbindungspunkt der Kollektoren von T2, T3 und der Drossel L1 verbunden werden. Weil dieser Punkt während des Abklingens des durch L1 fließenden Stromes auf die niedrige Durchlassspannung von D4 geklemmt ist, bleibt T4 länger gesperrt, nämlich bis der Strom durch L1, D1 und R7 fast vollständig abgeklungen ist. In der Ausführungsform gemäß Fig. 3, also ohne eine der Diode D2 in Fig. 1 entsprechende Diode, schaltet hingegen der Steuertransistor T4 entsprechend dem Ausgangssignal von OP2 bereits wieder durchlässig, wenn der Strom durch L1, D1 und R7 entsprechend dem Verhältnis der beiden Referenzspannungen von ca. 100 mV und ca. 10 mV auf 1/10 seines Wertes, also etwa 45 mA zurückgegangen ist.

Mit den gewählten Werten, nämlich der Batteriespannung von 9V, einer Induktivität von L1 von 1 mH bei einem Widerstand von 1,12 Ω und 0,22 Ω für R7 erreicht der Strom durch L1, D1 und R7 nach t2 gleich etwa 50 µs seinen durch R7 und die Referenzspannung am nichtinvertierenden Eingang von OP2 festgelegten Maximalwert von 450 mA, bei dem T2 und T3 in den Sperrzustand geschaltet werden.

## Patentansprüche

1. Gleichspannungsgespeiste Blinkschaltung mit einem Taktgeber, der einen Halbleiterschalter (T1, T2) steuert, in dessen Lastkreis eine Induktivität (L1) und mindestens eine LED (D1) sowie parallel zu der Induktivität (L1) und der LED (D1) eine Freilaufdiode (D4) liegen, wobei der Taktgeber einen Takt entsprechend der gewählten Blinkfrequenz und mit einer "EIN"-Zeit sowie während der "EIN"-Zeit eine Folge kurzer Pulse mit einer Pulsdauer liefert, und eine Strommessschaltung (R7, OP2) umfasst, die den Halbleiterschalter (T2, T3) während der "EIN"-Zeit jeweils sperrt, sobald der Strom durch die LED (D1) einen vorgegebenen Höchstwert erreicht hat, **dadurch gekennzeichnet, dass** an den Verbindungspunkt zwischen dem Halbleiterschalter (T2, T3) und der Induktivität (L1) ein Schaltelement angeschlossen ist, das den Halbleiterschalter (T2, T3) im Sperrzustand hält, bis der Strom in dem die Induktivität (L1), die LED (D1) und die Freilaufdiode (D4) umfassenden Stromkreis abgeklungen ist und dass
a) die "EIN"-Zeit im Bereich von etwa 30 ms bis 50 ms liegt,
b) die Pulsdauer zwischen ca 5 µs und ca. 50 µs liegt,
c) das Puls-/Pausenverhältnis zwischen ca. 1:4 und ca. 1:10 liegt und
d) der Teil der Schaltung zur Erzeugung der Folge kurzer Pulse selbstschwingend ist.

2. Blinkschaltung nach Anspruch 1, **dadurch gekennzeichnet, dass** die Strommessschaltung einen Stommesswiderstand (R7) in Serie zu der LED (D1) und einen Vergleicher (OP2) umfasst, an dessen erstem Eingang eine Referenzspannung und an dessen zweitem Eingang die an dem Strommesswiderstand (R7) abgegriffene, stromproportionale Spannung anliegt und dessen Ausgangssignal den Halbleiterschalter (T2, T3) schaltet.

3. Blinkschaltung nach Anspruch 2, **dadurch gekennzeichnet, dass** der Taktgeber einen Taktgenerator (OP1, R14 bis R17, C5, D5) umfasst, der ein Signal entsprechend dem langsamen Takt mit der gewählten Blinkfrequenz erzeugt, das als Versorgungsspannung des Vergleichers (OP2) verwendet wird.

4. Blinkschaltung nach einem der Ansprüche 1 bis 3, **dadurch gekennzeichet, dass** das Schaltelement, das dem Halbleiterschalter (T2, T3) während des Abklingens des Stromes in dem die Induktivität (L1), die LED (D1) und die Freilaufdiode (D4) umfassenden Stromkreis im Sperrzustand hält, aus einer Diode besteht, die als Klemmdiode zwischen die Basis eines Steuertransistors für den Halbleiterschalter (T2, T3) und den Verbindungspunkt zwischen dem Halbleiterschalter (T2, T3) und der Induktivität (L1) geschaltet ist.

5. Blinkschaltung nach einem der Ansprüche 1 bis 4,**dadurch gekennzeichnet, dass** der Halbleiterschalter aus mindestens zwei parallel geschalteten und parallel angesteuerten Schalttransistoren (T2, T3) besteht.

6. Blinkschaltung nach einem der Ansprüche 1 bis 5, **dadurch gekennzeichnet, dass** die Freilaufdiode (D4) eine Schottkydiode ist.

7. Blinkschaltung nach einem der Ansprüche 1 bis 6,**dadurch gekennzeichnet, dass** in einem ihrer beiden Anschlüsse an die Versorgungsspannung ein Arbeitskontakt (S2) eines Relais (Re1) liegt, das über eine einen Fotowiderstand (LDR) umfassende Dämmerungsschaltung gesteuert wird.

## Claims

1. A direct-voltage-supplied flashing-light circuit, comprising a clock unit which controls a semiconductor switch (T1, T2), in the load circuit of which there is disposed an inductive resistor (L1) and at least one LED (D1) and a freewheeling diode (D4) parallel to the inductive resistor (L1) and the LED (D1), with the clock unit supplying a clock pulse according to the selected blinking frequency and with an "ON" time and a sequence of short pulses with a pulse duration during the "ON" time, and a current measuring circuit (R7, OP2) which blocks the semiconductor switch (T2, T3) each during the "ON" time once the current through the LED (D1) has reached a predetermined maximum level, **characterized in that** a switching element is connected to the connection point between the semiconductor switch (T2, T3) and the inductive resistor (L1) which holds the semiconductor switch (T2, T3) in the blocked state until the current in the circuit comprising the inductive resistor (L1), the LED (D1) and the freewheeling diode (D4) has decayed and
a) the "ON" time lies in the range of approximately 30 ms to 50 ms;
b) the pulse duration lies between approx. 5 µs and approx. 50 µs;
c) the pulse/pause ratio lies between approx. 1:4 and approx. 1:10, and
d) the part of the circuit for generating the sequence of short pulses is self-oscillatory.

2. A flashing-light circuit according to claim 1, **characterized in that** the current measuring circuit comprises a current-sensing resistor (R7) in series to the LED (D1) and a comparator (OP2), with a reference voltage being applied to its first input and the current-proportional voltage which is tapped from the current-sensing resistor (R7) being applied to its second input, and the output signal of which switches the semiconductor switch (T2, T3).

3. A flashing-light circuit according to claim 2, **characterized in that** the clock unit comprises a clock generator (OP1, R14 to R17, C5, D5) which generates a signal according to the slow clock pulse with the selected flashing frequency which is used as a supply voltage of the comparator (OP2).

4. A flashing-light circuit according to one of the claims 1 to 3, **characterized in that** the switching element which holds the semiconductor switch (T2, T3) in the blocked state during the decay of the current in the circuit comprising the inductive resistor (L1), the LED (D1) and the freewheeling diode (D4) consists of a diode which is switched as a clamping diode between the base of a control transistor for the semiconductor switch (T2, T3) and the connection point between the semiconductor switch (T2, T3) and the inductive resistor (L1).

5. A flashing-light circuit according to one of the claims 1 to 4, **characterized in that** the semiconductor switch consists of at least two switching transistors (T2, T3) which are switched and triggered in parallel.

6. A flashing-light circuit according to one of the claims 1 to 5, **characterized in that** the freewheeling diode (D4) is a Schottky diode.

7. A flashing-light circuit according to one of the claims 1 to 6, **characterized in that** a make contact (S2) of a relay (Re1) lies in one of its two connections to the supply voltage, which relay is controlled via a twilight circuit comprising a photo-resistive cell (LDR).

## Revendications

1. Circuit de clignotant alimenté en courant continu avec un générateur de rythme qui commande un commutateur à semi-conducteurs (T1, T2) dont le circuit de charge contient une inductance (L1) et au moins une DEL (D1) ainsi qu'une diode de roue libre (D4) montée en parallèle avec l'inductance (L1) et la DEL (D1), dans lequel le générateur de rythme génère un rythme correspondant à la fréquence de clignotement choisie et fournit avec un temps « sous tension » pendant le temps « sous tension » une séquence de courtes impulsions ayant une durée d'impulsion, et comprend un circuit de mesure de l'intensité (R7, OP2) qui bloque le commutateur à semi-conducteurs (T2, T3) pendant le temps « sous tension » dès que l'intensité traversant la DEL (D1) atteint un maximum prédéterminé, **caractérisé en ce qu'**il est prévu au point de connexion entre le commutateur à semi-conducteurs (T2, T3) et l'inductance (L1) un élément de commutation qui maintient le commutateur à semi-conducteurs (T2, T3) dans l'état bloqué jusqu'à ce que l'intensité dans le circuit comprenant l'inductance (L1), la DEL (D1) et la diode de roue libre (D4) ait baissé et **en ce que**
a) le temps « sous tension » se situe dans une plage d'environ 30 ms à 50 ms,
b) la durée d'impulsion est comprise entre environ 5 µs et environ 50 µs,
c) le rapport entre impulsions et pause est compris entre environ 1 pour 4 et environ 1 pour 10, et
d) la partie du circuit destinée à produire la séquence de courtes impulsions est auto-hétérodyne.

2. Circuit de clignotant selon la revendication 1, **caractérisé en ce que** le circuit de mesure de l'intensité comprend une résistance de mesure de l'intensité (R7) montée en série avec la DEL (D1) et un comparateur (OP2) dont la première entrée reçoit une tension de référence et la deuxième entrée la tension proportionnelle à l'intensité captée sur la résistance de mesure de l'intensité (R7) et dont le signal de sortie fait commuter le commutateur à semi-conducteurs (T2, T3).

3. Circuit de clignotant selon la revendication 2, **caractérisé en ce que** le générateur de rythme comprend un générateur de fréquence (OP1, R14 à R17, C5, D5) qui génère un signal correspondant au rythme lent avec la fréquence de clignotement choisie utilisée comme tension d'alimentation du comparateur (OP2).

4. Circuit de clignotant selon l'une des revendications 1 à 3, **caractérisé en ce que** l'élément de commutation qui maintient le commutateur à semi-conducteurs (T2, T3) dans l'état bloqué pendant la baisse de l'intensité dans le circuit comprenant l'inductance (L1), la DEL (D1) et la diode de roue libre (D4) se compose d'une diode montée comme diode de verrouillage entre la base d'un transistor de commande pour le commutateur à semi-conducteurs (T2, T3) et le point de connexion entre le commutateur à semi-conducteurs (T2, T3) et l'inductance (L1).

5. Circuit de clignotant selon l'une des revendications 1 à 4, **caractérisé en ce que** le commutateur à semi-conducteurs se compose d'au moins deux transistors de commutation (T2, T3) montés en parallèle et activés en parallèle.

6. Circuit de clignotant selon l'une des revendications 1 à 5, **caractérisé en ce que** la diode de roue libre (D4) est une diode de Schottky.

7. Circuit de clignotant selon l'une des revendications 1 à 6, **caractérisé en ce qu'**il est prévu dans l'une de ses deux connexions à la tension d'alimentation un contact de travail (S2) d'un relais (Re1) qui est commandé par un circuit crépusculaire comprenant une photorésistance (LDR).
